# FASCICULE DE BREVET EUROPEEN

(11) **EP 4 077 060 B1**
(45) Date de publication et mention de la délivrance du brevet: **12.06.2024**
(21) Numéro de dépôt: 20845417.3
(22) Date de dépôt: 15.12.2020
(51) Int. Cl.: B60R 21/05

(54) **VÉHICULE À COLONNE DE DIRECTION COUPLÉE À UN DISPOSITIF ANTIVOL ET MASQUÉE PAR UNE COQUE INFÉRIEURE À PROTECTION INTÉGRALE**
FAHRZEUG MIT EINER DIEBSTAHLSICHERUNGSGEKOPPELTEN LENKSÄULE, DIE DURCH EINE UNTERSCHALE MIT INTEGRIERTEM SCHUTZ VERDECKT IST
VEHICLE WITH STEERING COLUMN COUPLED TO AN ANTI-THEFT DEVICE AND CONCEALED BY A LOWER SHELL WITH INTEGRAL PROTECTION

(30) Priorité: 20.12.2019 FR 1915306
(43) Date de publication de la demande: 26.10.2022
(73) Titulaire: Stellantis Auto SAS, 78300 Poissy (FR)
(72) Inventeur: LACOSTE, Arnaud, 91460 MARCOUSSIS (FR)
(86) Numéro de dépôt international: PCT/FR2020/052438
(87) Numéro de publication internationale: WO 2021/123598

(56) Documents cités:
- CN-U- 208 881 891
- CN-U- 209 079 980

## Description

### Domaine technique de l'invention

La présente invention revendique la priorité de la demande française 1915306 déposée le 20 décembre 2019.

L'invention concerne les véhicules comprenant un volant solidarisé à une colonne de direction, et plus précisément la protection du conducteur assurée par des coques inférieure et supérieure complémentaires masquant partiellement cette colonne de direction.

### Etat de la technique

De nombreux véhicules, notamment terrestres, comprennent un volant solidarisé à une colonne de direction passant sous une planche de bord. La partie technique de la colonne de direction, comprise entre le volant et la planche de bord, est fréquemment masquée par des coques inférieure et supérieure complémentaires, généralement réalisées par moulage (par un procédé d'injection d'une matière plastique).

La colonne de direction comportant des éléments rigides et partiellement saillants, généralement en métal, de nombreuses coques inférieures comprennent une paroi inférieure ayant une surface interne sur laquelle est installée une pièce d'absorption de choc afin de définir un écran protecteur pour les genoux du conducteur lorsque ce dernier se translate vers l'avant lors d'un choc au moins partiellement frontal ou d'un freinage brutal.

Cette pièce d'absorption de choc comprend habituellement une pièce en polystyrène et une tôle métallique de formes sensiblement identiques, placées l'une sur l'autre et solidarisées fixement l'une à l'autre par surmoulage lors de l'injection. Afin d'assurer une protection en tout endroit de la paroi inférieure de la coque inférieure, la pièce d'absorption de choc s'étend sur la quasi-intégralité de cette paroi inférieure tout en étant solidarisée fixement à cette dernière, généralement par des rondelles élastiques.

Le document CN208881891 décrit un véhicule comportant une colonne de direction en partie masquée par des coques inférieure et supérieure, la coque inférieure comprenant une paroi inférieure ayant une surface interne sur laquelle est installée une pièce d'absorption de choc. Le document CN209079980 décrit un véhicule comportant une colonne de direction en partie masquée par des coques inférieure et supérieure, la coque inférieure comprenant une paroi latérale définissant un renflement latéral logeant une partie d'un dispositif antivol.

Certains véhicules peuvent être commercialisés selon une première déclinaison, dans laquelle un dispositif antivol de type mécanique et associé à une clé de démarrage est couplé latéralement à la colonne de direction, et une seconde déclinaison, comprenant un dispositif antivol de type électrique et associé à une fonction dite d'Accès et Démarrage Main Libre (ou ADML), et donc sans clé de démarrage.

Dans la première déclinaison, la présence d'un dispositif antivol impose d'utiliser une coque inférieure spécifique dans laquelle l'une des deux parois latérales définit un renflement latéral logeant une partie du dispositif antivol. Si l'on veut assurer une protection latérale des genoux sous le dispositif antivol on est contraint d'utiliser une pièce d'absorption de choc différente de celle utilisée pour la seconde déclinaison car comportant une extension latérale sous le dispositif antivol. En d'autres termes, on est contraint de concevoir et fabriquer deux pièces d'absorption de choc différentes pour les première et seconde déclinaisons, ce qui impose de concevoir, fabriquer et utiliser deux outillages d'emboutissage de tôle, deux outillages d'injection de pièce en polystyrène avec surmoulage de la tôle, et deux outillages de contrôle géométrique. Cette solution est donc particulièrement onéreuse et chronophage.

L'invention a donc notamment pour but d'améliorer la situation.

### Présentation de l'invention

Elle propose notamment à cet effet un véhicule comprenant une colonne de direction en partie masquée par des coques inférieure et supérieure complémentaires et à laquelle est couplé latéralement un dispositif antivol, la coque inférieure comprenant une paroi inférieure ayant une surface interne sur laquelle est installée une première pièce d'absorption de choc et une paroi latérale définissant un renflement latéral logeant une partie du dispositif antivol.

Ce véhicule se caractérise par le fait qu'il comprend aussi une seconde pièce d'absorption de choc installée dans le renflement latéral sous le dispositif antivol.

Grâce à la combinaison des première et seconde pièces d'absorption de choc, l'intégralité des éléments rigides et partiellement saillants de la colonne de direction est avantageusement écrantée.

Le véhicule selon l'invention peut comporter d'autres caractéristiques qui peuvent être prises séparément ou en combinaison, et notamment :
- la seconde pièce d'absorption de choc peut être réalisée dans une matière plastique absorbant l'énergie en cas de choc ;
- la seconde pièce d'absorption de choc peut avoir une structure à caissons creux ;
- la seconde pièce d'absorption de choc peut être maintenue dans une position finale dans le renflement latéral par une partie latérale d'un bord périphérique de la première pièce d'absorption de choc ;
- la paroi latérale de la coque inférieure peut comprendre sur une face interne du renflement latéral au moins une protubérance interne traversant un trou associé et défini dans la seconde pièce d'absorption de choc, de manière à maintenir cette dernière dans une position prédéfinie suivant une direction longitudinale du véhicule ;
- la paroi latérale de la coque inférieure peut comprendre sur la face interne du renflement latéral deux protubérances internes parallèles entre elles et traversant respectivement deux trous associés et définis dans la seconde pièce d'absorption de choc ;
- la paroi latérale de la coque inférieure peut comprendre sur une face interne du renflement latéral une nervure latérale interne, délimitant entre elle et la paroi inférieure de la coque inférieure un logement interne logeant la seconde pièce d'absorption de choc, et définissant une butée empêchant une translation de cette dernière vers le dispositif antivol ;
- chaque protubérance interne peut être définie dans le logement interne et peut s'étendre suivant un axe qui est parallèle à une portion sous-jacente de la paroi inférieure ;
- il peut être éventuellement de type automobile.

### Brève description des figures

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »), d'où les lignes apparemment discontinues), sur lesquels :
[Fig. 1] illustre schématiquement, dans une vue en perspective du côté avant, une partie d'un exemple de colonne de direction d'un véhicule selon l'invention, à laquelle est couplé latéralement un dispositif antivol et partiellement masquée par une coque inférieure,
[Fig. 2] illustre schématiquement, dans une vue du dessus, la coque inférieure de la figure 1, équipée d'une première pièce d'absorption de choc mais avant qu'elle ne soit équipée d'une seconde pièce d'absorption de choc,
[Fig. 3] illustre schématiquement, dans une vue en perspective sur un côté latéral, la coque inférieure de la figure 2, équipée de ses première et seconde pièces d'absorption de choc, et
[Fig. 4] illustre schématiquement, dans une vue en perspective, le renflement latéral de la partie latérale de la coque inférieure de la figure 2, équipé de la seconde pièce d'absorption de choc.

### Description détaillée de l'invention

L'invention a notamment pour but de proposer un véhicule comprenant une colonne de direction 1 à laquelle est couplé latéralement un dispositif antivol 2 et en partie masquée par des coques inférieure 3 et supérieure complémentaires, la coque inférieure offrant une protection au conducteur sur l'intégralité de la partie de sa paroi inférieure 4 pouvant être heurtée par ce conducteur.

Dans ce qui suit, on considère, à titre d'exemple non limitatif, que le véhicule est de type automobile. Il s'agit par exemple d'une voiture. Mais l'invention n'est pas limitée à ce type de véhicule. En effet, elle concerne n'importe quel véhicule comprenant au moins une colonne de direction permettant à un conducteur de contrôler sa direction. Par conséquent, l'invention concerne au moins les véhicules terrestres, hormis les motocyclettes.

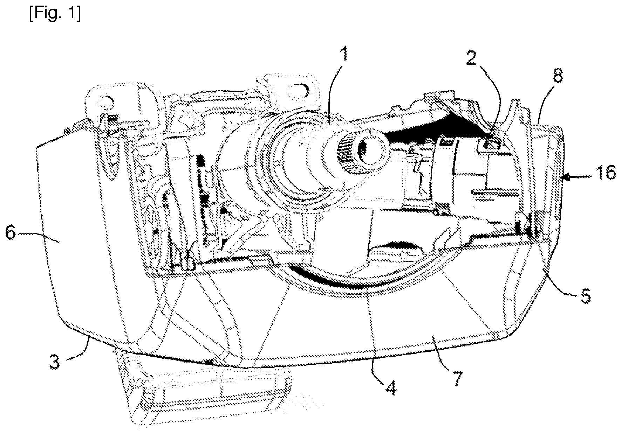

On a schématiquement représenté sur la figure 1 une partie d'un exemple de colonne de direction 1 destinée à équiper un véhicule selon l'invention et à être couplée à un volant (ou analogue), et à laquelle est couplé latéralement un dispositif antivol 2 destiné à bloquer la colonne de direction 1 dans son état verrouillé (en l'absence de clé de contact).

Ce dispositif antivol 2 est de type mécanique et associé à une clé de démarrage (non représentée).

Comme illustré, une partie de cette colonne de direction 1 est masquée par une coque inférieure 3 et par une coque supérieure complémentaire (non illustrée et non concernée par l'invention).

La coque inférieure 3 comprend une paroi inférieure 4 prolongée sur deux côtés opposés par des première 5 et seconde 6 parois latérales (ou longitudinales) et par une paroi avant 7 orientée vers les sièges avant.

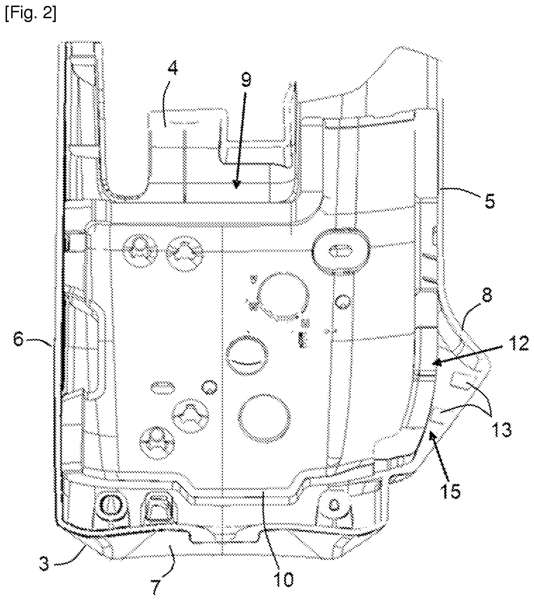

Comme illustré partiellement sur les figures 1 et 2, la première paroi latérale 5 (ici à droite) de la coque inférieure 3 définit un renflement latéral 8 logeant une partie du dispositif antivol 2 (le reste étant logé dans la zone située au-dessus de la paroi inférieure 4 et s'étendant jusqu'à la colonne de direction 1). Ce renflement latéral 8 est ce qui différencie la coque inférieure 3, ici utilisée en présence d'un dispositif antivol 2 (de type mécanique - première déclinaison), de la coque inférieure utilisée en présence d'un dispositif antivol de type électrique et associé à une fonction d'Accès et Démarrage Main Libre (seconde déclinaison).

Contrairement à la seconde déclinaison, dans la première déclinaison la paroi inférieure 4 de la coque inférieure 3 s'étend jusque dans le renflement latéral 8. De plus, cette paroi inférieure 4 a une surface interne 9 sur laquelle est installée une première pièce d'absorption de choc 10.

Cette première pièce d'absorption de choc 10 comprend, par exemple, une pièce en polystyrène et une tôle (métallique) de formes sensiblement identiques, placées l'une sur l'autre et solidarisées fixement l'une à l'autre par surmoulage lors de l'injection de matière plastique. On comprendra que cette première pièce d'absorption de choc 10 est identique à celle qui équipe la coque inférieure de la seconde déclinaison, et donc ne s'étend pas dans le renflement latéral 8 (puisque ce dernier (8) n'existe pas dans cette seconde déclinaison). Cette utilisation d'une même première pièce d'absorption de choc 10 pour les coques inférieures 3 différentes des première et seconde déclinaisons est destinée à réaliser des économies importantes.

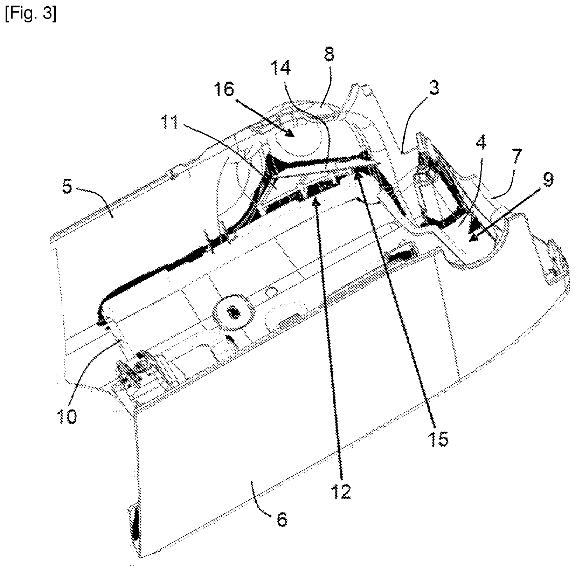

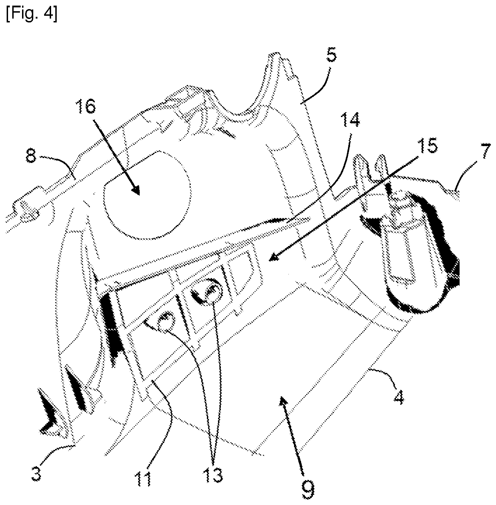

Comme illustré sur les figures 3 et 4, afin d'assurer une protection intégrale en tout endroit de la paroi inférieure 4 de la coque inférieure 3 et donc dans le renflement latéral 8, on installe dans ce dernier (8) une seconde pièce d'absorption de choc 11, sous le dispositif antivol 2.

On comprendra que le placement de cette seconde pièce d'absorption de choc 11 sous le dispositif antivol 2 permet de définir localement sous ce dernier (2) un autre écran protecteur pour les genoux du conducteur lorsque ce dernier se translate vers l'avant lors d'un choc au moins partiellement avant ou d'un freinage brutal, cet autre écran protecteur venant compléter l'écran protecteur défini par la première pièce d'absorption de choc 10. Ainsi, l'intégralité des éléments rigides et partiellement saillants de la colonne de direction est avantageusement écrantée, et donc la coque inférieure 3 assure une protection intégrale.

Par exemple, la seconde pièce d'absorption de choc 11 peut être réalisée dans une matière plastique absorbant l'énergie en cas de choc. Par exemple on peut utiliser une matière plastique absorbante telle que du polystyrène ou du polypropylène.

On notera, comme illustré non limitativement sur les figures 3 et 4, que la seconde pièce d'absorption de choc 11 peut avoir une structure à caissons creux. Cela permet d'augmenter sa résistance et/ou sa rigidité.

On notera également, comme illustré non limitativement sur la figure 3, que la seconde pièce d'absorption de choc 11 peut être avantageusement maintenue dans une position finale dans le renflement latéral 8 par une partie latérale (ici droite) 12 d'un bord périphérique de la première pièce d'absorption de choc 10. Cela permet avantageusement de caler automatiquement la seconde pièce d'absorption de choc 11 sans avoir besoin de définir un moyen de fixation par vissage ou clippage sur la face interne 9 de la paroi inférieure 4 qui, en plus, pourrait gêner l'installation de la seconde pièce d'absorption de choc 11 dans le renflement latéral 8 et aussi créer des zones agressives pour les genoux du conducteur.

On notera également, comme illustré non limitativement sur les figures 2 et 4, que la première paroi latérale 5 de la coque inférieure 3 peut comprendre sur une face interne du renflement latéral 8 au moins une protubérance interne 13 qui traverse un trou associé et défini dans la seconde pièce d'absorption de choc 11. Cela permet avantageusement de maintenir la seconde pièce d'absorption de choc 11 dans une position prédéfinie suivant une direction longitudinale du véhicule. Notamment cela permet de la positionner sans risque de la voir tomber avant de placer la première pièce d'absorption de choc 10 dont la partie latérale (ici droite) 12 du bord périphérique vient la bloquer transversalement, comme indiqué précédemment.

Dans l'exemple illustré non limitativement sur les figures 2 et 4, la première paroi latérale 5 de la coque inférieure 3 comprend sur la face interne du renflement latéral 8 deux protubérances internes 13 parallèles entre elles et traversant respectivement deux trous associés et définis dans la seconde pièce d'absorption de choc 11. Mais cette dernière pourrait ne comporter qu'une seule protubérance interne 13 ou bien comporter plus de deux protubérances internes 13 (par exemple trois).

Chaque protubérance interne 13 peut présenter une forme cylindrique circulaire, par exemple et comme illustré non limitativement.

On notera également, comme illustré non limitativement sur les figures 2 et 4, que la première paroi latérale 5 de la coque inférieure 3 peut comprendre sur la face interne de son renflement latéral 8 une nervure latérale interne 14 qui délimite entre elle (14) et la paroi inférieure 4 un logement interne 15 logeant la seconde pièce d'absorption de choc 11, et qui définit une butée empêchant une translation de cette dernière (11) vers le dispositif antivol 2. Ainsi, la seconde pièce d'absorption de choc 11 est immobilisée et ne risque pas de se déplacer en cas de choc, ce qui l'empêcherait d'assurer sa fonction de protection.

On notera également, comme illustré non limitativement sur les figures 2 et 4, que chaque protubérance interne 13 peut être définie dans le logement interne 15 et peut s'étendre suivant un axe qui est parallèle à une portion sous-jacente de la paroi inférieure 4.

On notera également, comme illustré non limitativement sur les figures 1, 3 et 4, que la première paroi latérale 5 de la coque inférieure 3 peut comprendre dans son renflement latéral 8 un trou traversant 15 dans lequel est positionnée l'extrémité libre du dispositif antivol 2 et qui permet l'introduction d'une clé de contact dans ce dernier (2) pour le déverrouiller et démarrer le véhicule.

## Revendications

1. Véhicule comprenant une colonne de direction (1) en partie masquée par des coques inférieure (3) et supérieure complémentaires et à laquelle est couplé latéralement un dispositif antivol (2), ladite coque inférieure (3) comprenant une paroi inférieure (4) ayant une surface interne (9) sur laquelle est installée une première pièce d'absorption de choc (10) et une paroi latérale (5) définissant un renflement latéral (8) logeant une partie dudit dispositif antivol (2), **caractérisé en ce qu'**il comprend en outre une seconde pièce d'absorption de choc (11) installée dans ledit renflement latéral (8) sous ledit dispositif antivol (2).

2. Véhicule selon la revendication 1, **caractérisé en ce que** ladite seconde pièce d'absorption de choc (11) est réalisée dans une matière plastique absorbant l'énergie en cas de choc.

3. Véhicule selon la revendication 1 ou 2, **caractérisé en ce que** ladite seconde pièce d'absorption de choc (11) a une structure à caissons creux.

4. Véhicule selon l'une des revendications 1 à 3, **caractérisé en ce que** ladite seconde pièce d'absorption de choc (11) est maintenue dans une position finale dans ledit renflement latéral (8) par une partie latérale d'un bord périphérique de ladite première pièce d'absorption de choc (10).

5. Véhicule selon l'une des revendications 1 à 4, **caractérisé en ce que** ladite paroi latérale (5) de la coque inférieure (3) comprend sur une face interne dudit renflement latéral (8) au moins une protubérance interne (13) traversant un trou associé et défini dans ladite seconde pièce d'absorption de choc (11), de manière à maintenir cette dernière (11) dans une position prédéfinie suivant une direction longitudinale dudit véhicule.

6. Véhicule selon la revendication 5, **caractérisé en ce que** ladite paroi latérale (5) de la coque inférieure (3) comprend sur ladite face interne du renflement latéral (8) deux protubérances internes (13) parallèles entre elles et traversant respectivement deux trous associés et définis dans ladite seconde pièce d'absorption de choc (11).

7. Véhicule selon l'une des revendications 1 à 6, **caractérisé en ce que** ladite paroi latérale (5) de la coque inférieure (3) comprend sur une face interne dudit renflement latéral (8) une nervure latérale interne (14), délimitant entre elle (14) et ladite paroi inférieure (4) un logement interne (15) logeant ladite seconde pièce d'absorption de choc (11), et définissant une butée empêchant une translation de cette dernière (11) vers ledit dispositif antivol (2).

8. Véhicule selon la revendication 5 ou 6 prise en combinaison avec la revendication 7, **caractérisé en ce que** chaque protubérance interne (13) est définie dans ledit logement interne (15) et s'étend suivant un axe parallèle à une portion sous-jacente de ladite paroi inférieure (4).

9. Véhicule selon l'une des revendications 1 à 8, **caractérisé en ce qu'**il est de type automobile.

## Patentansprüche

1. Fahrzeug mit einer Lenksäule (1), die teilweise durch komplementäre untere (3) und obere Schalen verdeckt ist und mit der seitlich eine Diebstahlsicherung (2) verbunden ist, wobei die untere Schale (3) eine untere Wand (4) mit einer Innenfläche (9) aufweist, auf der ein erstes Stoßdämpfungsteil (10) angebracht ist, und eine Seitenwand (5) aufweist, die eine seitliche Ausbauchung (8) definiert, die einen Teil der Diebstahlsicherung (2) aufnimmt, **dadurch gekennzeichnet, dass** sie ferner ein zweites Stoßdämpfungsteil (11) aufweist, das in der seitlichen Ausbauchung (8) unter der Diebstahlsicherung (2) angebracht ist.

2. Fahrzeug nach Anspruch 1, **dadurch gekennzeichnet, dass** das zweite Stoßdämpfungsteil (11) aus einem bei einem Aufprall energieabsorbierenden Kunststoff besteht.

3. Fahrzeug nach Anspruch 1 oder 2, **dadurch gekennzeichnet, dass** das zweite Stoßdämpfungsteil (11) eine Hohlkastenstruktur aufweist.

4. Fahrzeug nach einem der Ansprüche 1 bis 3, **dadurch gekennzeichnet, dass** das zweite Stoßdämpfungsteil (11) in einer Endposition in der seitlichen Verdickung (8) durch einen seitlichen Abschnitt eines Umfangsrandes des ersten Stoßdämpfungsteils (10) gehalten wird.

5. Fahrzeug nach einem der Ansprüche 1 bis 4, **dadurch gekennzeichnet, dass** die Seitenwand (5) der unteren Schale (3) auf einer Innenfläche des seitlichen Wulstes (8) mindestens einen inneren Vorsprung (13) aufweist, der durch ein zugeordnetes Loch verläuft und in dem zweiten Stoßdämpfungsteil (11) definiert ist, um dieses letztere (11) in einer vorbestimmten Position entlang einer Längsrichtung des Fahrzeugs zu halten.

6. Fahrzeug nach Anspruch 5, **dadurch gekennzeichnet, dass** die Seitenwand (5) der unteren Schale (3) auf der Innenseite der seitlichen Ausbuchtung (8) zwei innere Vorsprünge (13) aufweist, die parallel zueinander sind und jeweils durch zwei zugeordnete Löcher verlaufen, die in dem zweiten Stoßdämpfungsteil (11) definiert sind.

7. Fahrzeug nach einem der Ansprüche 1 bis 6, **dadurch gekennzeichnet, dass** die Seitenwand (5) der unteren Schale (3) auf einer Innenfläche der seitlichen Verdickung (8) eine innere seitliche Rippe (14) aufweist, die zwischen ihr (14) und der unteren Wand (4) eine innere Aufnahme (15) begrenzt, die das zweite Stoßdämpfungsteil (11) aufnimmt, und einen Anschlag bildet, der eine Verschiebung dieses letzteren (11) zur Diebstahlsicherungsvorrichtung (2) verhindert.

8. Fahrzeug nach Anspruch 5 oder 6 in Kombination mit Anspruch 7, **dadurch gekennzeichnet, dass** jeder innere Vorsprung (13) in dem inneren Gehäuse (15) definiert ist und sich entlang einer Achse parallel zu einem darunterliegenden Abschnitt der Bodenwand (4) erstreckt.

9. Fahrzeug nach einem der Ansprüche 1 bis 8, **dadurch gekennzeichnet, dass** es ein Kraftfahrzeug ist.

## Claims

1. Vehicle comprising a steering column (1) partly masked by complementary lower (3) and upper shells and to which an anti-theft device (2) is laterally coupled, said lower shell (3) comprising a lower wall (4) having an internal surface (9) on which is installed a first impact absorption part (10) and a lateral wall (5) defining a lateral bulge (8) housing a part of said anti-theft device (2), **characterized in that** it further comprises a second impact absorption part (11) installed in said lateral bulge (8) under said anti-theft device (2).

2. Vehicle according to claim 1, **characterized in that** the said second impact-absorbing part (11) is made of a plastic material absorbing energy in the event of an impact.

3. Vehicle according to claim 1 or 2, **characterized in that** the said second impact-absorbing part (11) has a hollow box structure.

4. Vehicle according to one of claims 1 to 3, **characterized in that** the said second impact-absorption part (11) is held in a final position in the said lateral bulge (8) by a lateral part of a peripheral edge of the said first impact-absorption part (10).

5. Vehicle according to one of claims 1 to 4, **characterized in that** the said side wall (5) of the lower shell (3) comprises, on an internal face of the said lateral bulge (8), at least one internal protuberance (13) passing through an associated hole and defined in the said second impact-absorbing part (11), so as to maintain the latter (11) in a predefined position in a longitudinal direction of the said vehicle.

6. Vehicle according to claim 5, **characterized in that** the said side wall (5) of the lower shell (3) comprises, on the said internal face of the lateral bulge (8), two internal protuberances (13) parallel to one another and passing respectively through two associated holes defined in the said second impact-absorbing part (11).

7. Vehicle according to one of claims 1 to 6, **characterized in that** the said side wall (5) of the lower shell (3) comprises, on an internal face of the said lateral bulge (8), an internal lateral rib (14), delimiting between it (14) and the said lower wall (4) an internal housing (15) housing the said second shock-absorbing part (11), and defining a stop preventing a translation of the latter (11) towards the said anti-theft device (2).

8. Vehicle according to claim 5 or 6 taken in combination with Claim 7, **characterized in that** each internal protuberance (13) is defined in the said internal housing (15) and extends along an axis parallel to an underlying portion of the said lower wall (4).

9. Vehicle according to one of claims 1 to 8, **characterized in that** it is of the motor vehicle type.
